# EUROPÄISCHE PATENTANMELDUNG

(11) **EP 0 709 491 A1**
(43) Veröffentlichungstag der Anmeldung: **01.05.1996**
(21) Anmeldenummer: 95112500.4
(22) Anmeldetag: 09.08.1995
(51) Int. Cl.: C23C 24/10, B23K 35/02, B23K 35/32

(54) **Verfahren und Vorrichtung zur Herstellung eines Schichtverbundwerkstoffs**

(30) Priorität: 14.10.1994 DE 4436657
(71) Anmelder: METALLGESELLSCHAFT AKTIENGESELLSCHAFT, D-60323 Frankfurt am Main (DE)
(72) Erfinder: Kruske, Gerhard, D-61440 Oberursel 5 (DE); Reimann, Hartwig, Dr., D-65835 Liederbach (DE)

(57) **Zusammenfassung**

Bei einem Verfahren zur Herstellung eines Schichtverbundwerkstoffs, bestehend aus einer Trägerschicht (2) aus Eisenwerkstoff und einer mit dieser metallurgisch verbundenen Schicht aus selbstfließender Hartlegierung (12) auf Nickelbasis, wird ein feinkörniges homogenes Gefüge mit feinverteilter arteigener Hartphase boridischer und/oder carbidischer Natur erzeugt. Eine verbesserte Herstellung besteht darin, daß Hartlegierungspulver (6) auf die kontinuierlich bewegte Trägerschicht (2) aufgetragen und die Trägerschicht (2) und die darauf befindliche Pulverschicht (6) kontinuierlich auf die Einschmelztemperatur der Hartlegierung erwärmt und der Schichtverbund kontinuierlich auf Raumtemperatur abgekühlt wird.

## Beschreibung

Die Erfindung bezieht sich auf ein Verfahren und eine Vorrichtung zur Herstellung eines Schichtverbundwerkstoffs sowie auf den hergestellten Schichtverbundwerkstoff, bestehend aus einer Trägerschicht aus Eisenwerkstoff und einer mit dieser metallurgisch verbundenen Schicht aus selbstfließender Hartlegierung auf Nickelbasis, vorzugsweise Ni-Cr-B-Si-Hartlegierung, die bei 870 bis 1200°C eingeschmolzen ist und ein feinkörniges homogenes Gefüge mit feinverteilter arteigener Hartphase boridischer und/oder carbidischer Natur besitzt.

Bekanntlich werden metallische Oberflächen durch mehrlagiges Auftragsschweißen oder -spritzen von Hartlegierungen vor verschleiß durch abrasiven Abtrag geschützt. Dabei werden vorzugsweise Cr-Ni-B- oder Ni-Cr-B-Si-Hartlegierungen, fallweise mit Hartstoff, z.B. Wolframcarbid, versetzt, aufgebracht. Da die durch Auftragsschweißen bzw. -Spritzen erzeugten Verschleißschutzschichten relativ unregelmäßig ausgebildet sind, sind aufwendige Schleifarbeiten erforderlich. Hinzu kommt, daß durch die Schleifarbeiten gerade die Schicht der Verschleißschutzschichten abgetragen wird, die sich durch eine hohe Härte auszeichnet. Das mehrlagige Auftragsschweißen bzw. -spritzen benötigt einen erheblichen Aufwand an Zeit, zumal die beispielsweise mit dem als Hartstoff dienenden Wolframcarbid gefüllten rohrförmigen Schweißstäbe recht schwierig und nur mit kleiner Schweißgeschwindigkeit bearbeitbar sind. Beim Pulverauftragsschweißen bzw. -spritzen entstehen relativ große Abbrandverluste bzw. Spritzverluste. Außerdem garantiert das übliche Auftragsschweißen bzw. -spritzen keine gleichmäßige Verteilung des Hartstoffs in der Verschleißschutzschicht. Das führt dazu, daß stellenweise bei hoher Konzentration von Hartstoff zu wenig Einbettmasse vorliegt, während die an Hartstoff verarmten Stellen vorzeitigem betrieblichen Verschleiß ausgesetzt sind. Im übrigen entstehen beim Auftragsschweißen bzw. -spritzen unvermeidbare Spannungen.

Ähnliche Nachteile besitzen auch bekannte, für den Verschleiß- und Korrosionsschutz eingesetzte Verbundelemente, die aus einer Trägerschicht aus einem gängigen Konstruktions-Eisenwerkstoff und einer auf dieser durch Aufsintern eines Hartlegierungspulvers auf Nickelbasis, insbesondere Ni-Cr-B-Si-Hartlegierungspulvers erzeugten Hartlegierungsschicht bestehen, die metallurgisch mit der Trägerschicht verbunden ist. In der Hartlegierungsschicht können noch zusätzliche Hartstoffe mit über 50 Vol.-% eingebracht sein (Firmenprospekt: GOTEK GmbH, Frankfurt/Main, 3166D/7.93/10).

Es ist die Aufgabe der vorliegenden Erfindung, ein Verfahren und eine Vorrichtung bereitzustellen, die eine kontinuierliche, großflächige Herstellung des eingangs beschriebenen Schichtverbundwerkstoffs mit glatten und rißfreien Oberflächen sowie guter Maßgenauigkeit ermöglicht, wobei aus dem Schichtverbundwerkstoff einzelne Verbundelemente ohne Schwierigkeiten abtrennbar sein sollen.

Die Lösung dieser Aufgabe besteht darin, daß pulverförmige, ggf. noch artfremde Stoffe, insbesondere Hartstoffe enthaltende Hartlegierung auf die flächenhaft vorbehandelte, relativ zum Aufgabeort des Pulvers kontinuierlich bewegte blech- oder bandförmige Trägerschicht aufgetragen, verdichtet und im Vakuum oder in inerter Atmosphäre die Trägerschicht und die darauf befindliche Pulverschicht kontinuierlich auf die Einschmelztemperatur der Hartlegierung erwärmt, die geschmolzene Hartlegierungsschicht geglättet und kalibriert und der Schichtverbund kontinuierlich auf Raumtemperatur abgekühlt wird.

In den Ansprüchen 2 bis 9 sind Ausgestaltungen dieser Verfahrensmaßnahmen beschrieben.

Die Vorrichtung zur Durchführung des Verfahrens besteht aus den Merkmalen des Anspruchs 10.

In den Ansprüchen 11 bis 15 sind mögliche Zusammensetzungen des Schichtverbundwerkstoffs wiedergegeben.

Im folgenden ist die Erfindung anhand einer Zeichnung näher und beispielhaft erläutert.

Das durch die Transportrollen (1) bewegte Stahlband (2) wird mittels einer Sandstrahleinrichtung (3) walzblank gereinigt. Über den Trichter (4) wird eine Schicht aus Ni-Cr-B-Si-Hartlegierungspulver der Zusammensetzung 18 Gew.-% Chrom, 2,5 Gew.-% Bor, 3 Gew.-% Silizium, 0,65 Gew.-% Kohlenstoff, Rest Nickel sowie 20 Gew.-% Wolframcarbidpulver und 20 Gew.-% Chromcarbidpulver auf das Stahlband (2) aufgetragen, durch die Walze (5) geglättet und leicht verdichtet. Das mit einer Geschwindigkeit von 5 m/h bewegte Stahlband (2) mit der darauf befindlichen Pulverschicht (6) läuft in den ersten Abschnitt (7) der die Transportstrecke (8) umschließenden Erwärmungseinrichtung (9) ein, in der zunächst eine kontinuierliche Erwärmung des Stahlbands (2) mit der darauf aufgebrachten Pulverschicht (6) bei einer mittleren Aufheizgeschwindigkeit von 35°C/min erfolgt. Im mittleren Abschnitt (10) der Erwärmungseinrichtung (9) haben das Stahlband (2) und die Pulverschicht (6) eine Temperatur von ca. 1120°C erreicht, bei der die Pulverschicht innerhalb von etwa 10 min einschmilzt. Durch die Walzen (11) wird die geschmolzene Hartlegierungsschicht (12) geglättet und kalibriert. Im dritten Abschnitt (13) der Erwärmungseinrichtung (9) beginnt eine kontinuierliche Abkühlung des Schichtverbundwerkstoffs mit einer mittleren Abkühlgeschwindigkeit von 20°C/min auf Raumtemperatur. Während der Abkühlphase wird der Schichtverbundwerkstoff durch die Walzen (14) gerichtet. Danach wird der Schichtverbundwerkstoff mittels einer Plasma-Schneideinrichtung (15) in handhabbare Werkstücke zerlegt.

Die mit der Erfindung erzielten Vorteile bestehen insbesondere in der Herstellung eines relativ großen Produktionsvolumens eines kalibrierten und verzugfreien Schichtverbundwerkstoffs hoher Güte.

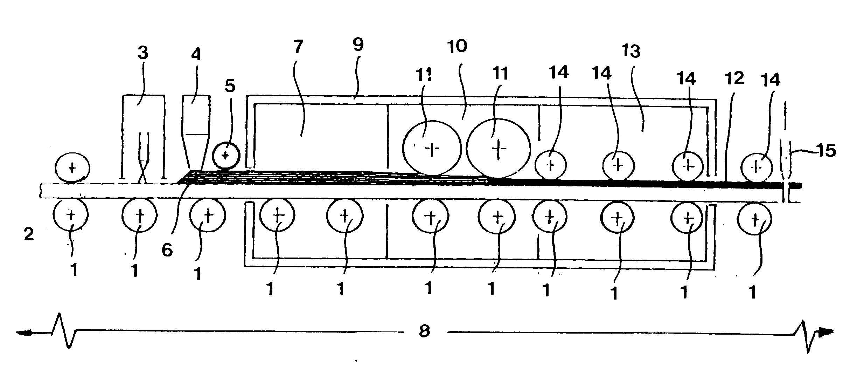

## Patentansprüche

1. Verfahren zur Herstellung eines Schichtverbundwerkstoffs, bestehend aus einer Trägerschicht aus Eisenwerkstoff und einer mit dieser metallurgisch verbundenen Schicht aus selbstfließender Hartlegierung auf Nickelbasis, vorzugsweise Ni-Cr-B-Si-Hartlegierung, die bei 870 bis 1200°C eingeschmolzen ist und die ein feinkörniges homogenes Gefüge mit feinverteilter arteigener Hartphase boridischer und/oder carbidischer Natur besitzt, dadurch gekennzeichnet, daß die pulverförmige, ggf. noch artfremde Stoffe, insbesondere Hartstoff enthaltende Hartlegierung auf die flächenhaft vorbehandelte, relativ zum Aufgabeort des Pulvers kontinuierlich bewegte blech- oder bandförmige Trägerschicht aufgetragen, verdichtet und im Vakuum oder in inerter Atmosphäre die Trägerschicht und die darauf befindliche Pulverschicht kontinuierlich auf die Einschmelztemperatur der Hartlegierung erwärmt, die geschmolzene Hartlegierungsschicht geglättet und kalibriert und der Schichtverbund kontinuierlich auf Raumtemperatur abgekühlt wird.

2. Verfahren nach Anspruch 1, dadurch gekennzeichnet, daß die Trägerschicht mit der darauf befindlichen Pulver- bzw. Hartlegierungsschicht mit einer Geschwindigkeit von 1 bis 12 m/h, vorzugsweise 2 bis 5 m/h, bewegt wird.

3. Verfahren nach einem der Ansprüche 1 und 2, dadurch gekennzeichnet, daß die kontinuierliche Erwärmung mit einer Geschwindigkeit von 20 bis 50°C/min erfolgt.

4. Verfahren nach einem der Ansprüche 1 bis 3, dadurch gekennzeichnet, daß die kontinuierliche Abkühlung mit einer Geschwindigkeit von 15 bis 80°C/min erfolgt.

5. Verfahren nach einem der Ansprüche 1 bis 4, dadurch gekennzeichnet, daß die Einschmelztemperatur für die Dauer von 3 bis 15 min konstant gehalten wird.

6. Verfahren nach einem der Ansprüche 1 bis 5, dadurch gekennzeichnet, daß die auf die Trägerschicht aufgetragene Pulverschicht geglättet und verdichtet wird.

7. Verfahren nach einem der Ansprüche 1 bis 6, dadurch gekennzeichnet, daß die geschmolzene Hartlegierungsschicht geglättet wird.

8. Verfahren nach einem der Ansprüche 1 bis 7, dadurch gekennzeichnet, daß der Schichtverbund während des kontinuierlichen Abkühlens gerichtet wird.

9. Verfahren nach einem der Ansprüche 1 bis 8, dadurch gekennzeichnet, daß die auf die Trägerschicht aufgetragene Pulverschicht mit einem Kleber benetzt wird.

10. Vorrichtung zur Herstellung eines Schichtverbundwerkstoffs, bestehend aus einer Trägerschicht (2) aus Eisenwerkstoff und einer mit dieser metallurgisch verbundenen Schicht (12) aus selbstfließender Hartlegierung auf Nickelbasis, vorzugsweise Ni-Cr-B-Si-Hartlegierung, die bei 870 bis 1200°C eingeschmolzen ist und die ein feinkörniges homogenes Gefüge mit feinverteilter arteigener Hartphase boridischer und/oder carbidischer Natur besitzt, gekennzeichnet durch eine Transporteinrichtung (1) für die Trägerschicht (2), eine Aufgabeeinrichtung (4) für das ggf. noch artfremde Stoffe enthaltene Hartlegierungspulver und eine Erwärmungs- und Abkühleinrichtung (9) sowie Walzen (11) für das Glätten der geschmolzenen Hartlegierungsschicht und zum Kalibrieren (14) des Schichtverbundwerkstoffs.

11. Schichtverbundwerkstoff, bestehend aus einer Trägerschicht (2) aus Eisenwerkstoff und einer mit dieser metallurgisch verbundenen Schicht (12) aus selbstfließender Hartlegierung auf Nickelbasis, vorzugsweise Ni-Cr-B-Si-Hartlegierung, die bei 870 bis 1200°C eingeschmolzen ist und die ein feinkörniges homogenes Gefüge mit feinverteilter arteigener Hartphase boridischer und/oder carbidischer Natur besitzt, dadurch gekennzeichnet, daß die Hartlegierungsschicht (12) 35 bis 65 Vol.-% boridischer und/oder carbidischer Hartphasen enthält.

12. Schichtverbundwerkstoff nach Anspruch 11, dadurch gekennzeichnet, daß in der Hartlegierungsschicht (12) 35 bis 80 Gew.-% mindestens einer der artfremden metallischen Hartstoffe wie Chrom-, Wolfram-, Molybdän-, Titan-, Niob-, Vanadium-Carbide, -Boride und -Silizide eingelagert ist.

13. Schichtverbundwerkstoff nach einem der Ansprüche 11 und 12, dadurch gekennzeichnet, daß die Hartlegierungsschicht (12) noch 5 bis 40 Gew.-% Molybdän und 3 bis 25 Gew.-% Kupfer einzeln oder zu mehreren enthält.

14. Schichtverbundwerkstoff nach einem der Ansprüche 11 bis 13, dadurch gekennzeichnet, daß in der Hartlegierungsschicht (12) noch 3 bis 20 Gew.-% Eisen und/oder 2 bis 10 Gew.-% Phosphor enthalten sind.

15. Schichtverbundwerkstoff nach einem der Ansprüche 11 bis 14, dadurch gekennzeichnet, daß die Hartlegierungsschicht (12) zusammengesetzt ist aus 6,0 bis 28,0 Gew.-% Chrom, 1,0 bis 4,0 Gew.-% Eisen, 1,5 bis 4,5 Gew.-% Bor, 1,0 bis 6,0 Gew.-% Silizium, 0,15 bis 1,2 Gew.-% Kohlenstoff, Rest Nickel.
